# EUROPEAN PATENT SPECIFICATION

(11) **EP 2 463 182 B1**
(45) Date of publication and mention of the grant of the patent: **28.11.2012**
(21) Application number: 10194673.9
(22) Date of filing: 13.12.2010
(51) Int. Cl.: B62D 65/06

(54) **Self-adaptive method for mounting side doors on motor-vehicle bodies**
Selbstadaptivverfahren zur Montage von Seitentüren an Fahrzeugkarosserien
Procédé auto-adaptatif pour monter des portes latérales sur des carrosseries de véhicules automobiles

(43) Date of publication of application: 13.06.2012
(73) Proprietor: C.R.F. Società Consortile per Azioni, 10043 Orbassano (Torino) (IT); COMAU SpA, 10095 Grugliasco (Torino) (IT)
(72) Inventor: Mangiarino, Carlo, I-10043, Orbassano (Torino) (IT)
(74) Representative: Notaro, Giancarlo

(56) References cited:
- EP-A1- 1 245 479
- DE-A1- 10 026 192
- FR-A1- 2 765 547
- US-A1- 2008 303 307

## Description

### Field of the invention

The present invention refers to the field of methods for manufacturing motor-vehicle bodies and in particular to the methods for assembling side doors, of the hinged type, on motor-vehicle bodies.

### Objects of the invention

The invention has the following main objects:
- improving functional and aesthetic quality of the produced bodies,
- eliminating manual operations critical for reliability of the finished product, which are currently applied in the known methods,
- simplifying factory logistic systems,
- shortening the time required for setting up production of new motor-vehicle models.

### Summary of the invention

With the aim of attaining such objects, the invention provides a method having the characteristics indicated in the attached claim 1.

Further advantageous characteristics of the invention are specified in the dependent claims.

According to the invention, in a system for assembling motor-vehicle bodies, for all the produced bodies, or only for some determined bodies each representing a corresponding batch of produced bodies, a geometric on-line detection is carried out of the points qualifying the coupling of the side doors with their respective receiving portions on each body side, assuming the plane on which the hinge elements connected to the car body are positioned as a reference plane (the coordinates X,Y,Z respectively corresponding to the longitudinal dimension, the transverse dimension and the vertical dimension of the body). With the aid of an optoelectronic system, mounting dimensions are determined in "real time" which are required in the self-adaptive assembling of the hinge elements on the body, for compensating the deviations ― with respect to the project dimensions - induced by the sheet-metal pressing processes and the assembling operations of the parts constituting the car body, thus ensuring that the positioning of the doors is consistent with the project drawing of the "body complete with movable parts" assembly.

For this purpose a specifically developed software program is used, which transforms the geometric detections into numerical data which can be fed to the machine controls for performing the self-adaptive operations described hereinafter. The software program depends from the body shape and takes into account also the elastic yielding of the vehicle structure due to the weight of the mounted doors and the nominal pressures required for ensuring the fluid sealing of the applied elastomeric wheather-strips. The dimensions of the hinge elements connected to the car body and their positioning on the body sides constitute the variables of the self-adaptive process, through which it is possible to provide a compensation of the deviations induced by the chain of tolerances which are inherent in systems for car body manufacturing, this compensation being obtained "on-process", i.e. for each car body (for deviations which are not sufficiently stable from one body to the other), or *"una tantum"* (only once) when setting up the manufacturing process, or "periodically", for each batch of produced bodies (for deviations which are sufficiently stable for all bodies of a single batch).

The doors completed with door hinge elements are produced with project nominal dimensions with sufficiently reduced tolerances, by using a method for mounting the hinge elements which is capable of compensating the deviations from the tolerance range induced by the process for forming the door frames, this compensation being made *"una tantum"* (only once) when setting up the manufacturing process, or "periodically" according to the production batches.

By the above mentioned methods of the invention, specific doors are rendered biunivocally adapted to a specific body, so that mounting of the doors on the bodies and on the vehicles can be carried out with no need of performing manual or semiautomatic adaptations along the line for completing the body, which would require using suitable calibration instruments on each door and on each door receiving body portion.

Further advantageous characteristics of the method of the present invention shall be described hereinafter, with references to the attached exemplifying drawings, in which:
- figure 1 is a side view of a motor-vehicle body, in which points are indicated which are subjected to an optoelectronic detection, according to one embodiment of the method according to the invention,
- figure 2 shows a view of the detail 11 of figure 1 at an enlarged scale, where laser markings obtained in a further embodiment of the method according to the invention are indicated, and
- figure 3 shows a perspective view of a hinge element to be connected to the body.

### Detailed description of the invention

According to the invention, within a system for assembling vehicle bodies, for all the produced bodies, or only for specific bodies each representing a corresponding batch of vehicle bodies, a geometric detection is carried-out on-line of the points qualifying the coupling of the side doors with the door receiving portions of the body sides.

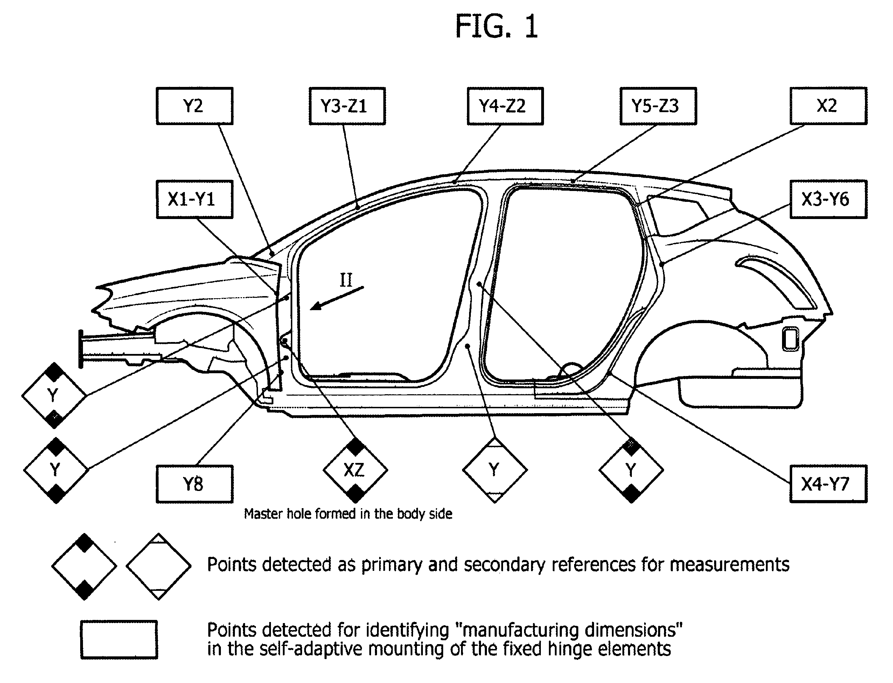

Figure 1 of the attached drawings is a side view of a motor-vehicle body in which the points of the body which are subjected to this detection operation are shown, with reference to a non-limiting example provided herein merely for illustration purposes. In the present description, coordinates X,Y,Z are associated, according to a standard practice, to the longitudinal direction, the transverse direction and the vertical direction respectively of the vehicle body. In figure 1, for each point subjected to detection, the respective measured dimensions are indicated. Furthermore, figure 1 indicates both points detected as primary references for measurements (see rhombi having black vertices), and points detected as secondary references for measurements (see rhombi with white vertices) as well as points (see symbols surrounded by rectangles) detected for determining the mounting (or manufacturing) dimensions in the self-adaptive mounting of the hinge elements on the vehicle body.

With the aim of performing the abovementioned detection operation, according to the method of the invention a programmable optoelectronic measurement system is provided on-line, comprising:
- a multi-axis robot, with accurate repeatable positioning capability,
- a camera, provided with an accurate telemetric sensor, applied to the wrist of the robot,
- an electronic unit connected to the camera, which processes the measurement data in real time according to a predetermined software program;
- a support for positioning the vehicle body on reference elements which mostly are adapted to engage the underbody, so as to locate it in a sufficiently accurate and repeatable manner with respect to a fixed reference at the work station where the abovementioned detection operation is carried out; such support can be positioned on a rotary table having a vertical axis, to enable a bilateral detection by using a single optoelectronic system.

Starting from the measurements carried-out in the abovementioned detection station, the mounting dimensions are defined which are required for mounting the side doors consistently with the project drawing of the side view and the cross-section of the assembly constituted by the vehicle body completed with movable parts.

When starting the pre-series production of a new model, systematic detection of the dimensions of interest is accomplished, so as to define proper frequency of measuring operations statistically.

In order to reach the result of the doors being mounted consistently with the design nominal dimensions, the processing electronic unit makes use of a software program, which transforms the geometric detections into numerical data which can be fed to the unit controlling the robots which perform the self-adaptive operations described hereinafter.

This software depends on the shape of the vehicle body and considers a geometric correction required to compensate the effect of the elastic yielding of the vehicle structure due to the weight of the completed doors mounted on the vehicle bodies and the nominal pressures on the elastomeric weather-strips, required for ensuring the sealing feature of the doors in their closed condition.

The mode and frequency of the specific detections for each produced model are controlled by the software program, which also applies determined interpolation rules to the measured Y dimensions.

The mounting dimensions resulting from this elaboration process enable a compensation - when mounting the body hinge elements on the body and the door hinge elements on the door ― of the deviations with respect to the design nominal dimensions which are induced by the chain of manufacturing tolerances resulting from the parts of pressed sheet-metal and/or by the systems for assembling and welding vehicle bodies and door frames.

The mounting methods described hereinafter guarantee a sufficient degree of accuracy, both with respect to aesthetic quality (proper correspondence between door profiles and associated coupling gaps) and with respect to functional quality (easy opening and closing of the doors, proper sealing by the weather-strips).

The adaptations which will be illustrated more in detail hereinafter can be performed either "on process", or through *"una tantum"* (only once) operations during the set-up stage of the product-process, or periodically, in relation to the analysis of measurements carried-out on each vehicle body or on each batch of bodies consecutively produced.

According to the invention, once the dimensions are detected with regard to a plurality of points of the vehicle body qualifying the coupling of the doors with the body, the processing electronic unit determines the "mounting dimensions", for the self-adaptive mounting of the hinge elements on the two body sides.

In the case of the embodiment considered herein and illustrated in figure 1, the hinge elements are secured onto coplanar sections of the body side surfaces, whose plane X/Z is assumed as a reference plane for measuring the Y dimensions orthogonal thereto.

The abovementioned operation for detecting and determining the mounting dimensions is carried-out on-line and according to the pace of the bodies assembly process.

The abovementioned control electronic unit which receives and processes the measurement data is connected to the electronic control of means for automated machining and mounting of the body hinge elements to the vehicle body. At least one multi-axis manipulator robot is used for this automated mounting.

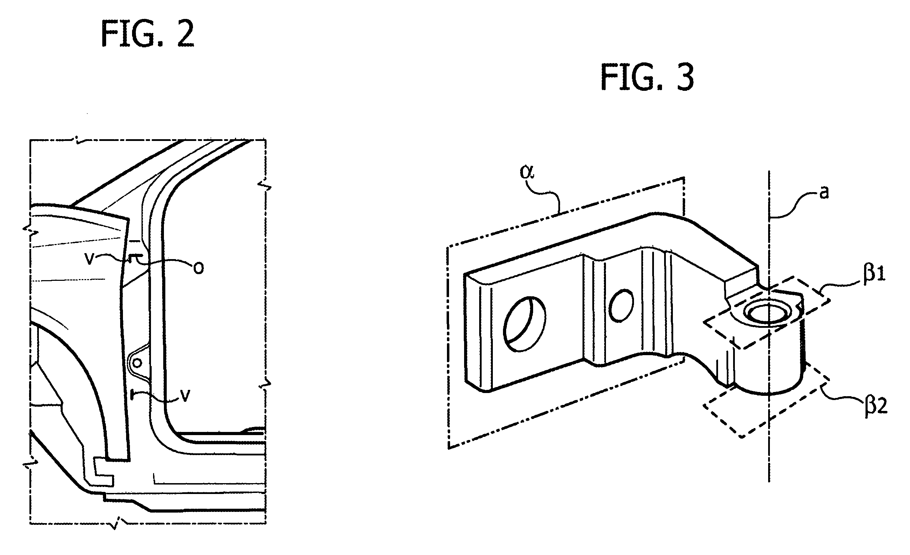

If manual mounting is preferred, an optical marking is provided of required references on the body sides for the correct positioning of the hinge elements along X and Z, as schematically illustrated in figure 2; such marking is intended to be performed by the same robot that carries the measurement camera and which is also provided with a laser emitter device, with low power and accurate focusing.

As visible in figure 2, in the case of the illustrated example there are provided:
- a horizontal line "o", relevant for positioning along the vertical direction,
- two vertical lines "v", relevant for accurate positioning of the hinge rotational axis.

Accurate visibility of the laser lines is obtained through two possible alternative solutions:
- slight incision of the sheet covering by means of thermal laser,
- laser marking on a photosensitive film, which is applied for this purpose at a required small area and removed, during pre-painting treatment of the vehicle body.

As previously indicated, the method according to the invention provides two alternative methods for the self-adaptive mounting of the body hinge elements to the vehicle body.

### First solution: automatic adaptive mounting

The following operating steps are provided:
- each pair of body hinge elements to be connected to the vehicle body (the configuration of one body hinge element is indicatively represented in the drawing of figure 3) is arranged at a work station, this work station comprising:
   ● the required gripper tools (two tools in the case of four-door models) for positioning, locking, gripping and transferring the two hinge elements, these tools being conceived so as to guarantee the correct orientation and coplanarity of the walls α, the alignment of the axes "a", and the correct distance between the sections β1.
      *The attached* *figure 3* *illustrates an exemplifying drawing of a hinge element connected to the body and indicates the references used for preparing the self-adaptive mounting. The symbols in such figure have the following meaning:*
         *α: plane of the hinge element to be secured to the vehicle body side;*
         *a: rotational axis of the door;*
         ***β1**: plane supporting the hinge element secured to the door;*
         *β2: plane or cone for abutment of the hinge pin;*
      *The upper and lower body hinge elements are coupled and positioned on the gripper tool in the following way:*
         *1) insertion of the hinge elements along axis (a) on coaxial pins and on accurately spaced apart support planes β1,*
         *2) orientation of the α walls by cooperation with a reference available at the work station,*
         *3) gripping of the hinge elements through electro-actuated activation along axis (a), abutment at β2 and locking reaction between β1 and β2.*
   ● a rotary table moves a base supporting the abovementioned tools and the associated electro-controls for locking;
   ● a numerical control single-spindle milling unit, adapted to adjust the position of the mounting plane "on-process" according to the Y mounting dimensions transmitted by the previously described detection system.

The rotary table supplies the following operating steps in sequence:
a) loading and locking of the two pairs of body hinge elements on the abovementioned gripper tools (one dedicated to the front door receiving body portions and the other to the rear door receiving body portions);
b) parallel machining of the α walls of the two body hinge elements, which are manufactured with a machining allowance (overdimensioned thickness) adapted for the range of compensation required for the Y dimensions; this operating step is not required if the detection system ascertains a sufficient degree of repeatability for the Y measured dimensions. In this latter case, the required adaptation is carried out either *"una tantum"* (only once) or periodically for each production batch, adapting via software the system, described hereinafter, for mounting the door hinge elements which are connected to the doors;
c) picking up the specific gripper tool for each door receiving body portion by means of the mounting robot.

For the self-adaptive mounting, an anthropomorphic robot is provided having a vision system adapted for calibrating - at each cycle - the geometric references, according to two possible alternative solutions:
- detecting starting points identical to those assumed by the previously described detection system, regarding the dimensions along X and Z;
- detecting the previously mentioned laser markings.

The following operating steps are provided for in succession:
- the robot transfers the pair of hinge elements by means of a gripper tool, and moves them close to the receiving flat surfaces of the vehicle body, adapting on process the positions of the elements on the plane X/Z, either on the basis of the mounting dimensions obtained from the previously described detection system, or according to direct detection by the vision system of the laser markings provided on the body (should this latter solution be used);
- the robot imparts a determined pressure along Y, through a unidirectional elastic cell, so as to bring the hinge elements against the coupling plane, guaranteeing the required stability of the hinge elements while they are being connected to the structure of the vehicle body side;
- after positioning, a second robot provided for the automatic fastening operation, inserts and fastens bolts for securing the hinge elements to the body, operating in a coordinated manner within the same station; fastening is carried out while the mounting robot keeps the pair of hinge elements stable against the coupling surfaces of the body;
- the mounting robot disengages the gripper tool and returns it to the cycle start position.

The abovementioned mounting steps are intended to be carried out in parallel with the steps for preparing the subsequent hinge elements to be connected to a respective body.

### Second solution: servo-assisted adaptive mounting

The body hinge elements are mounted on the body manually. The hinge elements are arranged in a manner identical to that described above in the case of automatic mounting but the gripper tools are carried by a balanced supporting hoist instead of being carried by a robot, thus enabling the operator to pick up the pair of hinge elements on the body through manual control actuations, while guaranteeing maintaining the mutual geometric set-up of the two hinge elements during assembling. The operator positions the two hinge elements on the body placing them in contact with the flat coupling surfaces, by using said gripper tools. At this point, the operator adapts the position of the hinge elements on the plane X/Z, with the aid of the laser markings obtained as described previously. This manual adaptation is carried out with the help of a vision system, constituted by a camera provided with a screen and opto-acoustic sensors, the gripper tools being provided with a calibrated edge for the optical collimation.

The operator then actuates the stop of the gripper tool against the coupling surface on the body and introduces and fastens the connecting bolts.

Lastly, the operator controls the disengagement of the gripper and returns the gripper tool to the cycle start position.

### Application of the door hinge elements to the door

After ascertaining the positioning consistency of the doors on the bodies, through the automatic or servo-assisted adaptation of the connection elements, the same must be made with the cooperating hinge elements to be applied on the doors.

The methods provided for this operation are different depending upon the construction characteristics of the doors.

### Doors constituted by frames of pressed steel sheet

For this type of construction the following steps are provided:
- the complete door structures, with inner frame and outer panel, are positioned and locked on specific tools, ensuring that the locating references at the mounting station are consistent with the shape of the peripheral contour of the door receiving apertures on the body sides, according to the project assembly drawing;
- the pair of hinge elements on the door is arranged on a specific gripper tool, which guarantees correct mutual positioning thereof (coaxiality of the bushings serving as seats for the hinge pin, proper distance between the support planes on the body hinge elements, proper orientation of the contact planes with the structure of the door); the criteria for arranging and gripping the hinge elements are similar to those described previously with reference to the body hinge elements;
- an anthropomorphic robot, installed also for automatic fastening, picks up the gripper tool, on which the door hinge elements are arranged, receives the two bolts required for the connection, moves the door hinge elements close to the coupling surfaces on the door frame, and inserts the two connecting bolts;
- before tightening the bolts, the robot adapts the position of the hinge elements according to the set movement program and imparts a determined pressure perpendicularly to the coupling surface, to an extent controlled by means of a unidirectional elastic cell;
- the robot actuates the controlled simultaneous tightening of the two hinge elements on the door;
- the robot releases the "gripper tool" and returns it to the cycle start area. The described robotized system is capable of installing an entire set of doors, provided it is equipped with the required specific tools.

The correct positioning of the door hinge elements along Y and Z on the flat coupling surfaces is determined by the robot movement program, after a highly accurate calibration of the references with respect to the fixed tools at the work station.

The deviation of the project nominal dimensions, in terms of the X position of the abovementioned coupling surfaces, which is induced by the sheet-metal pressing process and the assembling operations of the door frame, can be compensated either *"una tantum"* (only once) or periodically, depending on the batches of doors being produced, by suitably controlling the geometric detection system of the bodies through the previously described software program.

The repeatability of the process and the accuracy required for positioning the hinge elements on the door along Y and Z is guaranteed by the periodic calibration of the intrinsic references of the station, which can be adapted to many product designs (with suitably reduced set-up times for station retooling).

The periodic geometric control on the door modules (carried out on each production batch) determines the corrections to be introduced via software.

### Doors with die-cast aluminium frame

For this type of construction, the hinge elements on the door can be integrated in the casting. The required accuracy is obtained by means of machining - on a machine-center ― of the door hinge elements and the flat surface sections on which the guides for the movable window panes are located.

The machining of the seats receiving the bushings defining the hinge axis is carried out starting from references which correspond to the shape of the peripheral portions of the door receiving aperture on the vehicle body and guarantees satisfactory consistency with the project drawing in respect of proper conjugation of the doors with the door apertures on the vehicle body. Therefore, the operation described previously with reference to the steel sheet doors is not required with this embodiment.

### Mounting the doors on the body and painting

By the previously described methods the doors can be mounted on the vehicle body in a simple and quick manner, since there is no need of manual or semiautomatic adaptations along the lines for completing the bodies, as it occurs in the conventional art, in orderto the bi-univocally couple each door to a a specific vehicle body,.

Hence, there no longer arises the need for mounting the doors on the body before the painting process and subsequently removing them for final assembling operations, as it generally occurs in current conventional methods.

Thus, the methods of the invention eliminate critical operations and simplify the logistic system required for the management of the production processes.

In any case the same painting systems can be used, painting the doors in parallel with the bodies, and arranging them on side supports applied on the transfer tools used in the various stages of the painting process, after cyclic application and removal of snap caps required to protect the hinge seats for the hinge pin.

Such arrangement of the doors spaced apart from, and parallel to the body enables a complete automation of the paint application process.

Naturally, without prejudice to the principle of the method subject of the invention, the construction details and the embodiments may vary with respect to what has been described and illustrated purely by way of example, without departing from the scope of the present invention, as described in the appended claims.

## Claims

1. Method for mounting side doors on a motor-vehicle body, wherein the doors are connected to the body by means of a pair of hinges each providing a pivot for support and articulation of the door, each hinge comprising a first hinge element secured to the body, a second hinge element secured to the door, as well as a pin for their mutual rotational articulation,
said method comprising the steps of:
- detecting, by means of an optoelectronic system, a plurality of dimensions measured along coordinates X,Y,Z on the vehicle body, with the aid of proper references, for qualifying the geometric conditions of the coupling between the doors and the door-receiving portions,
- determining, on the basis of the detected dimensions, the mounting positions of each body hinge element to be secured to the vehicle body, so as to obtain that the pivots for support and articulation of the doors are consistent with the respective door-receiving portions on the vehicle body side, according to an assembly project drawing,
**characterised in that said method further comprises:**
- mounting the abovementioned hinge elements on the body in the positions thus determined,
- providing the doors with their respective door hinge elements, while adapting via software a system for mounting the door hinge elements in order to substantially ensure consistency with the project assembly drawing,
- mounting the doors on the vehicle body by connecting the body hinge elements and the door hinge elements to each other by simply inserting the respective articulation pins, with no need for further adaptation and adjustment operations along the lines for completing the vehicle bodies and/or for the final assembly of the vehicle.

2. Method according to claim 1, **characterised in that** the abovementioned operation for detecting and determining the mounting dimensions is carried out on-line according to the pace of the body assembly line, so as to perform the required adaptations "on process".

3. Method according to claim 2, **characterised in that** the operation for detecting the dimensions and determining the mounting positions is carried out by means of a programmable controlling system, which enables operating on several models, without requiring a set-up time.

4. Method according to claim 3, **characterised in that** said controlling system is directly connected to systems for controlling automated machining and assembly means.

5. Method according to claim 3, **characterised in that** said controlling system is also capable of controlling the optical marking - on the vehicle body - of the required references for the assisted manual mounting of the body hinge elements to be connected to the body.

6. Method according to claim 1, **characterised in that** the abovementioned detection operation is carried out by:
- first detecting at least three points of the flat surfaces of the body sides on which the body hinge elements are fastened,
- assuming said surfaces as reference planes for the measurements along the Y direction,
- carrying out the required interpolations of the measurement data, as a function of the optimisation of the coupling profiles between the doors and the respective door-receiving portions on the body sides.

7. Method according to claim 1, **characterised in that** the abovementioned detection system is programmed to perform said step for determining the mounting dimensions, considering the coupling profiles defined by the shape of the vehicle body, as well as the elastic yielding of the vehicle structure due to the weight of the door and the pressure required for ensuring proper sealing action of the elastomeric weather-strips applied on the body.

8. Method according to claim 5, **characterised in that** the references for mounting the body hinge elements on the body are obtained either through a slight incision by means of thermal laser, or alternatively through of laser marking on a photosensitive film, applied on a selected part of the body.

9. Method according to claim 4, **characterised in that** each pair of hinge elements on the body is arranged at a work station so as to obtain:
- proper orientation and coplanarity of the walls (α) of said body hinge elements which come into contact with the coupling surfaces on the body,
- alignment and coincidence of the hinge axes (a) defined by the two body hinge elements,
- proper mutual distance of support portions (β1) of the hinge elements along said hinge axis (a);
- said method further being **characterised in that** the coplanar machining of the walls (α), is carried out by removing a machining allowance provided for obtaining the proper positioning of the hinge axis on the body along Y, and
- **in that** the two body hinge elements thus machined are picked up by means of a gripper tool by a manipulator robot, which carries out the operation for self-adapting the two hinge elements on to the vehicle body.

10. Method according to claim 9, **characterised in that** said manipulator robot positions the hinge elements on the body side, holding them stably by pushing them against their connection surfaces, with a controlled unidirectional pressure, while a second robot or another fastening system inserts and fastens the bolts which connect the hinge elements to the structure of the body.

11. Method according to claim 1, **characterised in that** the hinge elements on the door are integrated in the structure of the door and are machined on a machine-center, consistently with flat surface portions on which guides for movable window panes are arranged.

## Patentansprüche

1. Verfahren zum Anbringen von Seitentüren an einer Kraftfahrzeugkarosserie, wobei die Türen mit der Karosserie mit Hilfe zweier Scharniere verbunden werden, die jeweils einen Zapfen für die Halterung und das Schwenken der Tür bereitstellen, und jedes Scharnier ein erstes Scharnierelement, das an der Karosserie befestigt ist, und ein zweites Scharnierelement, das an der Tür befestigt ist, sowie einen Splint für deren gegenseitiges drehendes Schwenken umfassen,
wobei das Verfahren folgende Schritte umfasst:
- Erfassen mit Hilfe eines optoelektronischen Systems einer Vielzahl von Abmessungen, die entlang Koordinaten X, Y, Z an der Fahrzeugkarosserie gemessen werden, unter Zuhilfenahme geeigneter Bezugspunkte, um die geometrischen Bedingungen der Verbindung zwischen den Türen und den Türaufnahmeabschnitten zu bestimmen, und
- Ermitteln, auf der Basis der erfassten Abmessungen, der Anbringungspositionen jedes Karosserie-Scharnierelementes, das an der Fahrzeugkarosserie befestigt werden soll, um so zu bewirken, dass die Zapfen für die Halterung und das Schwenken der Türen mit den entsprechenden Türaufnahmeabschnitten auf der Seite der Fahrzeugkarosserie gemäß einer Konstruktionszeichnung übereinstimmen,
**dadurch gekennzeichnet, dass** das Verfahren weiterhin umfasst:
- Anbringen der oben erwähnten Scharnierelemente an der Karosserie an den auf diese Weise ermittelten Positionen,
- Versehen der Türen mit ihren entsprechenden Türscharnierelementen, wobei über Software ein System zum Anbringen der Türscharnierelemente angepasst wird, um im wesentlichen eine Übereinstimmung mit der Konstruktionszeichnung sicherzustellen, und
- Anbringen der Türen an der Fahrzeugkarosserie durch Verbinden der Karosseriescharnierelemente und der Türscharnierelemente miteinander durch einfaches Einfügen der entsprechenden Scharniersplinte, ohne Erfordernis zusätzlicher Anpassungs - und Justiertätigkeiten entlang der Produktionsstraßen für die Vervollständigung der Fahrzeugkarosserien und/oder für die abschließende Montage des Fahrzeugs.

2. Verfahren nach Anspruch 1, **dadurch gekennzeichnet**, das der oben erwähnte Vorgang zum Erfassen und Ermitteln der Anbringungsabmessungen an der Produktionsstraße gemäß der Geschwindigkeit der Karosserie-Produktionsstraße ausgeführt wird, um so die erforderlichen Anpassungen "im Produktionsverlauf" auszuführen.

3. Verfahren nach Anspruch 2, **dadurch gekennzeichnet, dass** der Vorgang zum Erfassen der Abmessungen und Ermitteln der Anbringungspositionen mit Hilfe eines programmierbaren Steuersystems ausgeführt wird, das ein Arbeiten an mehreren Modellen ermöglicht, ohne dass eine Einrichtzeit erforderlich ist.

4. Verfahren nach Anspruch 3, **dadurch gekennzeichnet, dass** das Steuersystem direkt mit Systemen zum Steuern automatisierter Bearbeitungs- und Montageeinrichtungen verbunden ist.

5. Verfahren nach Anspruch 3, **dadurch gekennzeichnet, dass** das Steuersystem zudem in der Lage ist, die optische Markierung - an der Fahrzeugkarosserie - der erforderlichen Bezugspunkte für die assistierte manuelle Anbringung der Karosseriescharnierelemente zu steuern, die mit der Karosserie verbunden werden sollen.

6. Verfahren nach Anspruch 1, **dadurch gekennzeichnet, dass** der oben beschriebene Erfassungsvorgang ausgeführt wird durch:
- vorangehendes Erfassen wenigstens dreier Punkte der flachen Oberflächen der Karosserieseiten, an denen die Karosseriescharnierelemente befestigt werden,
- Heranziehen der Oberflächen als Bezugsebenen für die Messungen entlang der Y-Richtung und
- Ausführen der erforderlichen Interpolationen der Messdaten als eine Funktion der Optimierung der Anschlussprofile zwischen den Türen und den entsprechenden Türaufnahmeabschnitten an den Karosserieseiten.

7. Verfahren nach Anspruch 1, **dadurch gekennzeichnet, dass** das oben beschriebene Erfassungssystem dazu programmiert ist, den Schritt zum Ermitteln der Anbringungsabmessungen auszuführen, wobei die Anschlussprofile, die durch die Form der Fahrzeugkarosserie definiert sind, wie auch das elastische Nachgeben der Fahrzeugstruktur infolge des Gewichtes der Tür und des Drucks, der zum Sicherstellen einer geeigneten Dichtungstätigkeit der Elastomerdichtungsstreifen, die an der Karosserie angebracht sind, erforderlich ist, berücksichtigt werden.

8. Verfahren nach Anspruch 5, **dadurch gekennzeichnet, dass** die Bezugspunkte zum Anbringen der Karosseriescharnierelemente an der Karosserie, entweder durch leichtes Einschneiden mit Hilfe eines thermischen Lasers oder alternativ durch eine Lasermarkierung auf einer lichtempfindlichen Folie erzeugt werden, die an einem gewählten Teil der Karosserie angebracht ist.

9. Verfahren nach Anspruch 4, **dadurch gekennzeichnet, dass** jedes Paar von Scharnierelementen an der Karosserie an einer Arbeitsstation angeordnet ist, um zu erzielen:
- eine geeignete Ausrichtung und Flächenparallelität der Wände (α) der Karosseriescharnierelemente, die mit den Anschlussflächen der Karosserie in Berührung kommen,
- eine Ausrichtung und Übereinstimmung der Scharnierachsen (a), die durch zwei Karosseriescharnierelemente definiert sind, und
- ein geeigneter gegenseitiger Abstand der Halteabschnitte (β1) der Scharnierelemente entlang der Scharnierachse (a);
- wobei das Verfahren weiterhin **dadurch gekennzeichnet ist, dass** die flächenparallele Bearbeitung der Wände (α) durch Entfernen einer Bearbeitungstoleranz ausgeführt wird, die für das Erzielen der geeigneten Positionierung der Scharnierachse auf der Karosserie entlang Y vorgesehen ist, und
- dass die beiden Karosseriescharnierelemente, die auf diese Weise bearbeitet werden, mit Hilfe eines Greifwerkzeuges durch einen Roboter aufgenommen werden, der die Tätigkeit der Selbstanpassung der beiden Scharnierelemente an der Fahrzeugkarosserie ausführt.

10. Verfahren nach Anspruch 9, **dadurch gekennzeichnet, dass** der Roboter die Scharnierelemente auf der Karosserieseite positioniert, indem er diese durch Drücken derselben gegen ihre Verbindungsflächen mit einem gesteuerten unidirektionalen Druck stabil hält, während ein zweiter Roboter oder ein weiteres Befestigungssystem die Schrauben einfügt und festzieht, die die Scharnierelemente mit der Konstruktion der Karosserie verbinden.

11. Verfahren nach Anspruch 1, **dadurch gekennzeichnet, dass** die Scharnierelemente an der Tür in der Konstruktion der Tür integriert sind und an einem Bearbeitungszentrum in Übereinstimmung mit flachen Oberflächenabschnitten bearbeitet werden, an den Führungen für bewegliche Fensterscheiben angeordnet sind.

## Revendications

1. Procédé pour monter des portes latérales sur une carrosserie de véhicule automobile, dans lequel les portes sont raccordées à la carrosserie au moyen d'une paire de charnières, fournissant chacune un pivot pour le support et l'articulation de la porte, chaque charnière comprenant un premier élément de charnière fixé à la carrosserie, un second élément de charnière fixé à la porte, ainsi qu'une broche pour leur articulation rotative mutuelle,
ledit procédé comprenant les étapes consistant à :
détecter, au moyen d'un système optoélectronique, une pluralité de dimensions mesurées le long des coordonnées X, Y, Z sur la carrosserie du véhicule, à l'aide de références correctes, pour qualifier les conditions géométriques du couplage entre les portes et les parties de réception de porte,
déterminer, en fonction des dimensions détectées, les positions de montage de chaque élément de charnière de carrosserie à fixer sur la carrosserie du véhicule, afin d'obtenir que les pivots pour le support et l'articulation des portes soient compatibles avec les parties de réception de porte respectives du côté de la carrosserie du véhicule, selon un dessin d'assemblage du projet,
**caractérisé en ce que** ledit procédé comprend en outre les étapes consistant à :
monter les éléments de charnière mentionnés ci-dessus sur la carrosserie dans les positions ainsi déterminées ;
prévoir les portes avec leurs éléments de charnière de porte respectifs, tout en adaptant via un logiciel, un système pour monter les éléments de charnière de porte afin de garantir sensiblement la compatibilité avec le dessin d'assemblage du projet,
monter les portes sur la carrosserie de véhicule en raccordant les éléments de charnière de carrosserie et les éléments de charnière de porte entre eux en insérant simplement les broches d'articulation respectives, sans avoir besoin d'autres opérations d'adaptation et d'ajustement le long des lignes pour terminer les carrosseries de véhicule et/ou l'assemblage définitif du véhicule.

2. Procédé selon la revendication 1, **caractérisé en ce que** l'opération mentionnée ci-dessus consistant à détecter et déterminer les dimensions de montage est réalisée en ligne selon la cadence de la chaîne de montage de carrosserie, afin de réaliser les adaptations requises « en direct ».

3. Procédé selon la revendication 2, **caractérisé en ce que** l'opération pour détecter les dimensions et déterminer les positions de montage est réalisée au moyen d'un système de contrôle programmable, qui permet d'agir sur plusieurs modèles, sans nécessiter de temps de mise en marche.

4. Procédé selon la revendication 3, **caractérisé en ce que** ledit système de contrôle est directement raccordé aux systèmes pour contrôler des moyens d'usinage et d'assemblage automatiques.

5. Procédé selon la revendication 3, **caractérisé en ce que** ledit système de contrôle est également capable de contrôler la marque optique - sur la carrosserie du véhicule - des références requises pour le montage manuel assisté des éléments de charnière de carrosserie à raccorder à la carrosserie.

6. Procédé selon la revendication 1, **caractérisé en ce que** l'opération de détection mentionnée ci-dessus est réalisée par les étapes consistant à :
détecter tout d'abord au moins trois points des surfaces plates des côtés de la carrosserie sur lesquelles les éléments de charnière de carrosserie sont fixés,
prendre lesdites surfaces en tant que plans de référence pour les mesures le long de la direction Y,
réaliser les interpolations de données de mesure requises, en fonction de l'optimisation des profils de couplage entre les portes et les parties de réception de porte respectives sur les côtés de la carrosserie.

7. Procédé selon la revendication 1, **caractérisé en ce que** le système de détection mentionné ci-dessus est programmé pour réaliser ladite étape consistant à déterminer les dimensions de montage, considérer les profils de couplage définis par la forme de la carrosserie du véhicule, ainsi que l'allongement élastique de la structure du véhicule dû au poids de la porte et la pression requise pour garantir une bonne action d'étanchéité des joints élastomères appliqués sur la carrosserie.

8. Procédé selon la revendication 5, **caractérisé en ce que** les références pour monter les éléments de charnière de carrosserie sur la carrosserie sont obtenues par une légère incision au moyen d'un laser thermique ou bien en variante par un marquage laser sur un film photosensible, appliqué sur une partie sélectionnée de la carrosserie.

9. Procédé selon la revendication 4, **caractérisé en ce que** chaque paire d'éléments de charnière sur la carrosserie est agencée sur une station de travail afin d'obtenir :
une bonne orientation et la coplanarité des parois (α) desdits éléments de charnière de carrosserie qui viennent en contact avec les surfaces de couplage sur la carrosserie,
l'alignement et la coïncidence des axes de charnière (a) définis par les deux éléments de charnière de carrosserie,
la bonne distance mutuelle des parties de support (β1) des éléments de charnière le long dudit axe de charnière (a) ;
ledit procédé étant en outre **caractérisé en ce que** l'usinage coplanaire des parois (α) est réalisé en supprimant une tolérance d'usinage prévue pour obtenir le bon positionnement de l'axe de charnière sur la carrosserie le long de Y, et
**en ce que** les deux éléments de charnière de carrosserie ainsi usinés sont pris au moyen d'un outil de préhension par un robot manipulateur, qui réalise l'opération consistant à adapter automatiquement les deux éléments de charnière sur la carrosserie du véhicule.

10. Procédé selon la revendication 9, **caractérisé en ce que** ledit robot manipulateur positionne les éléments de charnière du côté de la carrosserie, les maintenant de manière stable en les poussant contre leurs surfaces de raccordement, avec une pression unidirectionnelle contrôlée, alors qu'un second robot ou un autre système de fixation insère et fixe les boulons qui raccordent les éléments de charnière à la structure de la carrosserie.

11. Procédé selon la revendication 1, **caractérisé en ce que** les éléments de charnière sur la porte sont intégrés dans la structure de la porte et sont usinés sur un centre d'usinage, de manière compatible avec les parties de surface plate sur lesquelles des guides pour des vitres de fenêtre mobiles sont agencés.
